**Europäisches Patentamt**

**European Patent Office**

**Office européen des brevets**

(11) Veröffentlichungsnummer: **0 126 463**
A1

# EUROPÄISCHE PATENTANMELDUNG

(21) Anmeldenummer: **84105707.8**

(22) Anmeldetag: **18.05.84**

(51) Int. Cl.³: **F 02 B 37/00,** F 02 B 33/06, F 02 B 39/04

(30) Priorität: 18.05.83 DE 3318161
18.05.83 DE 3318094
18.05.83 DE 3318136

(43) Veröffentlichungstag der Anmeldung: **28.11.84**
**Patentblatt 84/48**

(84) Benannte Vertragsstaaten: **DE FR GB IT SE**

(71) Anmelder: **Schatz, Oskar, Dr.-Ing., Waldpromenade 16, D-8035 Gauting (DE)**

(72) Erfinder: **Schatz, Oskar, Dr.-Ing., Waldpromenade 16, D-8035 Gauting (DE)**

(74) Vertreter: **Lamprecht, Helmut, Dipl.-Ing., Corneliusstrasse 42, D-8000 München 5 (DE)**

(54) **Verfahren zum Einbringen der Ladeluft in den Zylinder eines Verbrennungsmotors und Motor zur Durchführung des Verfahrens.**

(57) Ein Verfahren zum Einbringen der Ladeluft in den Zylinder eines Verbrennungsmotors, bei dem vorverdichtete Luft aus einem Verdrängerlader durch Wärmetausch gekühlt und anschliessend entspannt wird, bis der gewünschte Ladedruck erreicht ist, wobei die Ausschubbewegung des Kolbens bzw. der Kolben des Verdrängerladers mit der Kolbenbewegung der zu versorgenden Motorzylinder derart synchronisiert ist, dass die aus dem Lader verdrängte Luft unmittelbar in den betroffenen Motorzylinder überströmt.

Dr.-Ing. Oskar Schatz

D - 8035 Gauting

## Verfahren zum Einbringen der Ladeluft in den Zylinder eines Verbrennungsmotors und Motor zur Durchführung des Verfahrens.

Die Erfindung betrifft ein Verfahren zum Einbringen der Ladeluft in den Zylinder eines Verbrennungsmotors, bei dem vorverdichtete Luft aus einem Verdrängerlader durch Wärmetausch gekühlt und anschließend entspannt wird, bis der gewünschte Ladedruck erreicht ist, sowie einen Motor zur Durchführung des Verfahrens.

Vergleichbare Verfahren sind beispielsweise unter dem Begriff "Turbokühlung" bzw. "Miller-Verfahren" bekannt geworden. Die Serieneinführung scheiterte an den zu hohen Kosten und dem hohen Energiebedarf für

0126463

den Antrieb des Laders. Insbesondere durch den hohen Energiebedarf wurden die Vorteile des Verfahrens, wie Verbrauchssenkung. z. T. wieder zunichte gemacht, bzw. das Potential zur Reduzierung der NOX-Werte bzw. zur Verbesserung der Klopfneigung von Otto-Motoren wurde nicht ausgeschöpft.

Aufgabe der Erfindung ist es, den Kraftstoffverbrauch des Motors zu senken, insbesondere durch die Reduzierung der Antriebsleistung des Laders, die Leistungsdichte des Motors zu erhöhen und die Temperatur der Ladeluft auf ein möglichst niedriges Niveau zu bringen.

Die Lösung dieser Aufgabe besteht erfindungsgemäß darin, daß die Ausschubbewegung des Kolbens bzw. der Kolben des Verdrängerladers mit der Kolbenbewegung der zu versorgenden Motorzylinder derart synchronisiert ist, daß die aus dem Lader verdrängte Luft unmittelbar in den betroffenen Motorzylinder überströmt.

Durch dieses Verfahren entfällt die Ausschubarbeit in einen Zwischenspeicher, wie dies bei der sog. Aufladung der Fall ist.

Nach einer Ausführungsform des erfindungsgemäßen Verfahrens kann die Entspannung im Motorzylinder stattfinden.

0126463

Die Synchronisation zwischen der Motor- und der Laderbewegung kann unveränderbar vorgegeben sein. In diesem Fall besteht eine zweckmäßige Ausgestaltung darin, daß bei einem abgasgetriebenen Verdrängerlader der Rhythmus der Ladeluftwellen durch den Rhythmus der natürlichen Abgasimpulse bestimmt wird.

Nach einer zweckmäßigen Ausführungsform kann das Ausmaß der Entspannung durch das vorzeitige Schließen des Einlaßventils am Motorzylinder bewirkt werden. Der Schließzeitpunkt kann fest eingestellt oder regelbar sein.

Die Festlegung des Entspannungsbeginns der Ladeluft im Motorzylinder kann auch durch die Veränderung der Phasenlage zwischen der Bewegung des Motorkolbens und des Laderkolbens bewirkt werden. Durch die Veränderung der Phasenlage kann die Luftmenge beeinflußt werden. Die Luftmenge kann auch zusätzlich beeinflußt werden.

Eine vorteilhafte Ausgestaltung besteht noch darin, daß ein Teil der Ladeluft durch die Bewegung des Motorkolbens angesaugt wird. Dadurch sinkt der Bauaufwand und die Antriebsleistung des Laders.

0126463

Die Veränderung der Phasenlage der Bewegung von
Motorkolben und Laderkolben kann bei abgasgetriebenen
Verdrängerladern durch eine regelbare Steuerung auf
der Abgasseite des Laders bewirkt werden. Bei mechanisch angetriebenen Ladern kann die Veränderung der
Phasenlage zwischen der Bewegung des Motorkolbens und
des Laderkolbens durch einen Riementrieb bewirkt
werden, bei dem die Winkelstellung zwischen Antriebs-
und Abtriebswelle veränderbar ist.

Bei abgasgetriebenen Ladern kann die Intensität der
natürlichen Abgasimpulse durch zusätzliche Vorrichtungen auf der Abgasseite des Laders, wie z. B.
Drosselstellen, verstärkt werden.

Die Mengenregelung beim abgasgetriebenen Lader kann
durch eine entsprechend ausgelegte, auf den frei
beweglichen Laderkolben wirkende Rückstellfeder
bewirkt werden, damit sich der Kolbenhub entsprechend
der Intensität der Abgasimpulse verändern kann.

Der Beginn der Expansion der Ladeluft im Motorzylinder kann durch das Hubende des Laderkolbens bestimmt
werden. Hierbei kann bei fehlender Rückschlagklappe
am Luftausgang des Laders auch eine Rückexpansion der
verdichteten Ladeluft aus dem Motorzylinder in den
Lader stattfinden, bis das Einlaßventil des Motors

0126463

schließt. Eine solche Ausgestaltung ist kostengünstig und hat eine positive Auswirkung auf den Durchfluß der Ladeluft durch den zwischen Lader und Motor angeordneten Wärmetauscher.

Die zusätzlich zur Saugbewegung des Laders angesaugte Luft kann durch einen Bypass um den Lader in den Motorzylinder gelangen oder direkt durch einen entsprechend gestalteten Lader.

Eine vorteilhafte Ausgestaltung des Verfahrens kann darin bestehen, daß man zur unabhängigen Beeinflussung von Luftmenge und Entspannungsbeginn den Hubraum des Laders und die Schadräume von Lader, Luftleitung, Wärmetauscher und Motor entsprechend verändert.

Statt die Entspannung im Motorzylinder durchzuführen, besteht eine andere vorteilhafte Ausgestaltung darin, daß die Entspannung zwischen Wärmetauscher und Motorzylinder durchgeführt wird. Dabei kann die Entspannungsenergie über einen Entspanner dem Motorabtrieb zugeführt werden. Der Entspanner kann mit dem Lader kombiniert sein, um die Entspannungsenergie für die Vorverdichtung der Ladeluft zu nützen. Außerdem kann eine Kombination zwischen Lader, Ladeluftentspanner und einer Vorrichtung zur Entspannung der Abgase zweckmäßig sein.

0126463

Weitere vorteilhafte Ausgestaltungen ergeben sich aus den Unteransprüchen in Verbindung mit der Beschreibung. Anhand der nun folgenden Beschreibung der in der Zeichnung dargestellten Ausführungsbeispiele der Erfindung wird diese näher erläutert.

Es zeigt:

Fig. 1 schematisch einen Viertaktmotor, bei welchem zur Durchführung des erfindungsgemäßen Verfahrens zwei Zylinder mit einem Verdrängerlader verbunden sind,

Fig. 2 schematisch einen Motorzylinder mit einem Verdränger-Lader in Flachkolben-Bauweise,

Fig. 3 eine der Fig. 2 ähnliche Darstellung eines Motors, der mit einem von der Motorkurbelwelle aus angetriebenen Verdrängerlader versehen ist,

Fig. 4 ein Arbeitsdiagramm des Laders einer konventionellen Aufladung,

Fig. 5 ein Arbeitsdiagramm des laders einer ersten Variante des erfindungsgemäßen Verfahrens,

Fig. 6 ein Arbeitsdiagramm des Laders einer zweiten Variante des erfindungsgemäßen Verfahrens,

Fig. 7 eine schematische Seitenansicht einer ersten Variante eines für die Anordnung nach Fig. 3 geeigneten Bandtriebs und

Fig. 8    eine schematische Seitenansicht einer zweiten Variante eines solchen Bandtriebs.


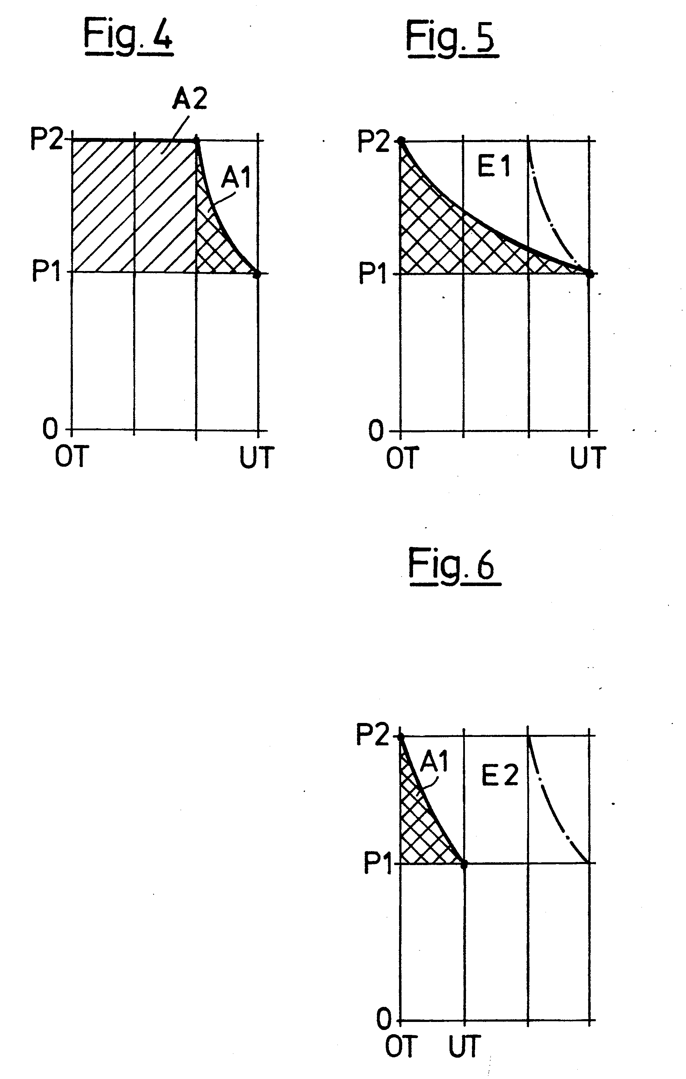

Zum besseren Verständnis wird zunächst die Wirkungsweise der Erfindung im Vergleich mit bekannten Ladeverfahren anhand der Fig. 4 bis 6 erläutert. In
diesen Diagrammen ist auf der Abszisse jeweils das
Volumen der Laderkammer aufgetragen, wobei bei allen
Beispielen der Luftbedarf 1,5 Liter beträgt und ein
Volumen des zu ladenden Verbrennungsraums von 1 Liter
zugrundegelegt ist, also eine gewünschte Verdichtung
von 1,5 : 1. Schadräume im System sind vernachlässigt. Auf der Ordinate ist der Druck aufgetragen,
wobei der Druck P1 dem Atmosphärendruck und der Druck
P2 den Ladungsenddruck im Motorzylinder bezeichnet.
Auf der Abszisse bezeichnet UT den unteren Totpunkt,
d. h. die Stellung des Verdrängerladers, in welcher
die Laderkammer innerhalb ihres Arbeitszyklus das
größte Volumen aufweist, und OT den oberen Totpunkt,
d. h. die Stellung des Verdrängerladers, in welcher
die Laderkammer innerhalb ihres Arbeitszyklus das
kleinste Volumen aufweist.


Das Diagramm in Fig. 4 zeigt den Bewegungs- und
Druckverlauf beim Verdrängerlader bei Durchführung
der konventionellen Aufladung. Dabei wird die Ladeluft zunächst vom Atmosphärendruck P1 auf den Ladungsenddruck P2 verdichtet und dann aus dem Verdränger-

- 8 -

0126463

lader in einen Zwischenspeicher (Luftverteiler) ausgeschoben, von wo die verdichtete Luft dann in den Motorzylinder abfließt. Bei der Darstellung des Druckverlaufs ist zur Vereinfachung ein unendlich großer Speicher angenommen worden, so daß nach der Verdichtung der Druck P2 konstant bleibt.

In Fig. 4 besteht keine direkte zeitliche Beziehung zwischen dem Verdichtungshub des Laders und dem Ansaughub des Motorkolbens, weil ein bestimmtes Luftvolumen den Ladedruck beliebig lang vor dem Einströmen in den Motorzylinder erreicht. Man erkennt einen relativ kleinen Anteil A1 der aufzubringenden Arbeit, der die Verdichtungsarbeit darstellt, und einen demgegenüber wesentlich größeren Anteil A2, der die Arbeit zum Ausschieben der verdichteten Luft aus dem Lader in den Puffer darstellt, der durch den Zwischenspeicher bzw. das Luftverteilungssystem gebildet wird und üblicherweise ein Fassungsvermögen von mehreren Hubvolumina eines Motorzylinders bzw. einer Laderkammer aufweist. Bei der Aufladung nach Fig. 4 strömt die verdichtete Luft von Beginn des Saughubs an, d. h. nach dem Öffnen des Einlaßventils, in den Motorzylinder, wobei ein Teil der mit A2 bezeichneten Ausschubarbeit an den Motorkolben abgegeben wird.

- 9 -

0126463

Bei der Aufladung nach Fig. 4 ist keine Synchronisation zwischen der Bewegung des Verdrängerladers und der Kolbenbewegung des zu versorgenden Motorzylinders erforderlich oder vorgesehen. Die Vorteile der Erfindung ergeben sich aus einer solchen Synchronisation, die so ausgelegt ist, daß die aus dem Lader verdrängte Luft unter Berücksichtigung der unvermeidbaren Schadräume in den Motorzylinder überströmt. Die Fig. 5 und 6 zeigen zwei Varianten dieser Verfahrensweise.

Bei dem in Fig. 5 dargestellten Verfahren findet der Ausschub- und Verdichtungshub des Verdrängerladers im wesentlichen während der gesamten Dauer des Ansaughubs des Motorkolbens statt. Die Ladeluft wird durch die Kolbenbewegung im Motorzylinder angesaugt und parallel dazu wird die Luft aus dem Verdrängerlader ausgeschoben und wegen des größeren Hubraumes des Laders gleichzeitig vom atmosphärischen Druck P1 auf den Enddruck P2 vor Entspannung verdichtet, weshalb diese Verfahrensweise nachfolgend als "Parallelladung" bezeichnet wird.

Bei dieser Parallelladung ist das vom Verdrängerlader geförderte Luftvolumen gleich groß wie bei der konventionellen, in Fig. 4 dargestellten Aufladung, jedoch wird der Enddruck P2 erst am Ende des Verdichtungshubs des Verdrängerladers, also im oberen Tot-

0126463

punkt, erreicht, was zeitlich mit dem Einlaßende des entsprechenden Motorzylinders zusammenfällt. Wie sich aus einem Vergleich der Fig. 4 und 5 ergibt, ist der Arbeitsaufwand wesentlich geringer. Der Anteil an eingesparter Arbeit ist mit E1 gekennzeichnet.

Die Fig. 6 zeigt ein demgegenüber noch weiter verbessertes Verfahren, bei welchem die Luft ebenfalls unmittelbar aus dem Verdrängerlader in den Motorzylinder überströmt und bei welchem der Energiebedarf noch weiter gesenkt ist. Bei diesem Verfahren saugt der Motorzylinder zunächst unter Atmosphärendruck stehende Luft an, ohne daß dabei zunächst Ladeluft aus dem Verdrängerlader verdichtet und ausgeschoben wird. Erst wenn sich der Kolben im Motorzylinder im Bereich des gewünschten Entspannungspunktes (Beginn der Entspannung) befindet, wird vom Verdrängerlader das Differenzvolumen direkt in den Motorzylinder geschoben, um die noch unter Atmosphärendruck stehende, angesaugte Luft auf den gewünschten Enddruck vor Entspannung zu bringen. Es wird in diesem Fall die Verdichtung des für einen bestimmten Motorzylinder gewünschten Differenzluftvolumens zeitlich genau auf die Kolbenbewegung im Motorzylinder abgestimmt und dabei direkt aus dem Verdrängerlader in den Verbrennungsraum gedrückt, weshalb dieses Ladeverfahren nachfolgend als "direkte Nachladung" bezeichnet wird.

- 11 -

0126463

Wie ein Vergleich der Fig. 4 und 6 zeigt, findet während des Verdichtungshubs bei der direkten Nachladung die in Fig. 4 mit A1 bezeichnete Verdichtungsarbeit statt, die den Druck im Motorzylinder auf den Enddruck vor Entspannung bringt. Der Anteil der gegenüber der konventionellen Aufladung eingesparten Arbeit ist mit E2 bezeichnet und ist mengenmäßig mit der in Fig. 4 mit A2 bezeichneten Ausschubarbeit identisch. Bei dieser Betriebsweise liegen die Antriebsleistungen für die Ladevorrichtung - wie theoretisch nachweisbar ist - bei etwa 18 % der Antriebsleistung, welche erforderlich ist, wenn die Ladeluft gemäß Fig. 4 zuerst verdichtet und in einen Puffer ausgeschoben wird und dann in den Motorzylinder einströmt.

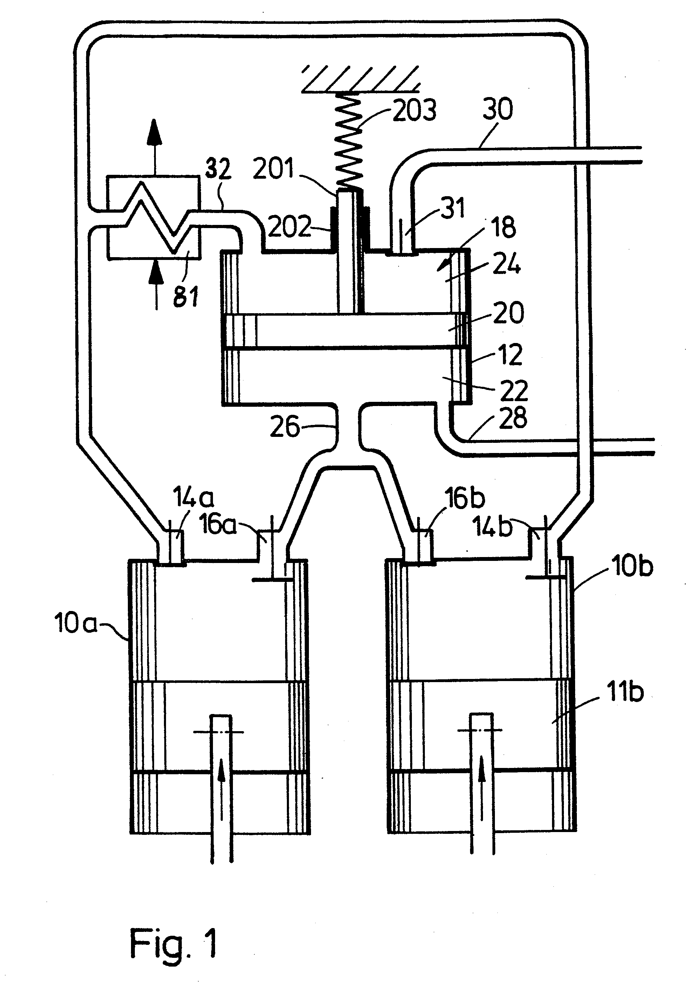

Die Fig. 1 zeigt schematisch einen Viertaktmotor, der durch zwei Zylinder 10a und 10b angedeutet ist. Diese Zylinder besitzen jeweils einen Lufteinlaß 14a bzw. 14b und einen Abgasauslaß 16a bzw. 16b. Zwischen den beiden Zylindern 10a und 10b befindet sich ein Abgaslader 12, in welchem eine Laderkammer 18 durch eine Trennwand 20 in Form eines Kolbens in eine Abgaskammer 22 und eine Ladeluftkammer 24 unterteilt wird. Die Abgaskammer ist mit einem Abgaseinlaß 26 und einem Abgasauslaß 28 versehen, wobei der Abgaseinlaß 26 mit dem Abgasauslaß 16a des Zylinders 10a und dem Abgasauslaß 16b des Zylinders 10b verbunden ist,

0126463

während der Abgasauslaß 28 der Abgaskammer 22 mit dem Auspuffsystem des Motors verbunden ist. Die Ladeluftkammer 24 besitzt einen Ladelufteinlaß 30, in dem eine Rückschlagklappe 31 angeordnet ist, und einen Ladeluftauslaß 32, der mit dem Lufteinlaß 14a des Zylinders 10a und dem Lufteinlaß 14b des Zylinders 10b verbunden ist. Falls ein Rückströmen der verdichteten Ladeluft aus dem Motorzylinder in die Ladeluftkammer 24 nicht erwünscht ist, kann der Ladeluftauslaß 32 mit einem Rückschlagventil versehen sein. Der Ladeluftauslaß 32 mündet in einen Wärmetauscher 81 der die verdichtete und erhitzte Ladeluft abkühlt. Von hieraus fließt die Luft zu den Ladelufteinlässen 14a und 14b.

Die Trennwand 20 wird durch die Führungsstange 201 in der Führung 202 geführt. Die Rückstellfeder 203 drückt auf die Führungsstange 201 und wirkt so dem Abgasdruck entgegen. Hierdurch wird sichergestellt, daß die Trennwand 20 sich bei Eintreffen des Abgasimpulses jeweils im unteren Totpunkt der Ladeluftkammer 24 befindet. Die Feder 203 kann so ausgelegt werden, daß die Hublänge der Trennwand 20 jeweils der Intensität des Abgasimpulses entspricht, wodurch eine Anpassung der Fördermenge der Ladeluftkammer 24 an die Belastung des Motors möglich wird.

0126463

Für das Verfahren der "Parallelladung" ist das Fördervolumen des Laders 12 so groß, daß gerade der maximale Luftbedarf der Zylinders 10a bzw. 10b für ein
Arbeitsspiel gedeckt wird.

Beispielsweise wird durch die Bewegung des Kolbens
11b im Zylinder 10b vom oberen zum unteren Totpunkt
bei geöffnetem Lufteinlaß 14b Luft über den Lufteinlaß 30 des Laders 12 angesaugt. Durch entsprechend
abgestimmte Anordnung wird zu Beginn des Saughubs des
Kolbens 11b, d. h. bei Öffnung des Lufteinlasses 14b
des Zylinders 10b, die Trennwand 20 von einem Druckstoß aus dem Abgasauslaß 16a des Zylinders 10a erreicht und in Fig. 1 nach oben geschoben, so daß der
Lufteinlaß 30 durch die ihm zugeordnete Rückschlagklappe 31 sofort geschlossen und der gesamte Luftbedarf des Zylinders 10b aus der Ladeluftkammer 24
des Laders 12 gedeckt wird, wobei die Bewegung der
Trennwand 20 den Druck der Ladeluft bis zum Ende des
Vorgangs auf P2 anhebt, wie dies in Fig. 5 gezeigt
ist. Der sich aufbauende Gegendruck schiebt mit
Unterstützung der Rückstellfeder 203 schließlich die
Trennwand 20 wieder zurück, wodurch das Abgas aus der
Abgaskammer 22 über den Abgasauslaß 28 in das Auspuffsystem ausgeschoben wird. Zugleich wird in die Ladeluftkammer 24 wieder Luft über den Ladelufteinlaß 30
eingesaugt, wobei sich die zugeordnete Rückschlagklappe 31 öffnet.

- 14 -

0126463

Bei der "direkten Nachladung" wird der Abgasimpuls aus dem Abgasauslaß 16a des Zylinders 10a zeitlich so abgestimmt, daß er die Trennwand 20 erst erreicht, wenn der Kolben 11b sich im Bereich des gewünschten Entsprannungspunktes befindet. Der Kolben 11b saugt somit bis zu diesem Zeitpunkt Ladeluft unter Atmosphärendruck P1 über den Ladelufteinlaß 30, die Ladeluftkammer 24 und den Ladeluftauslaß 32 an. Wenn schließlich die Trennwand 20 nach oben (Fig. 1) bewegt wird, schließt die Rückschlagklappe den Ladelufteinlaß 30 und der Druck im Zylinder 10b wird vom Druck P1 auf den Druck P2 angehoben, wobei sich dies während eines relativ kleinen Kurbelwinkels des Kolbens 11b abspielt, wie die Fig. 6 zeigt.

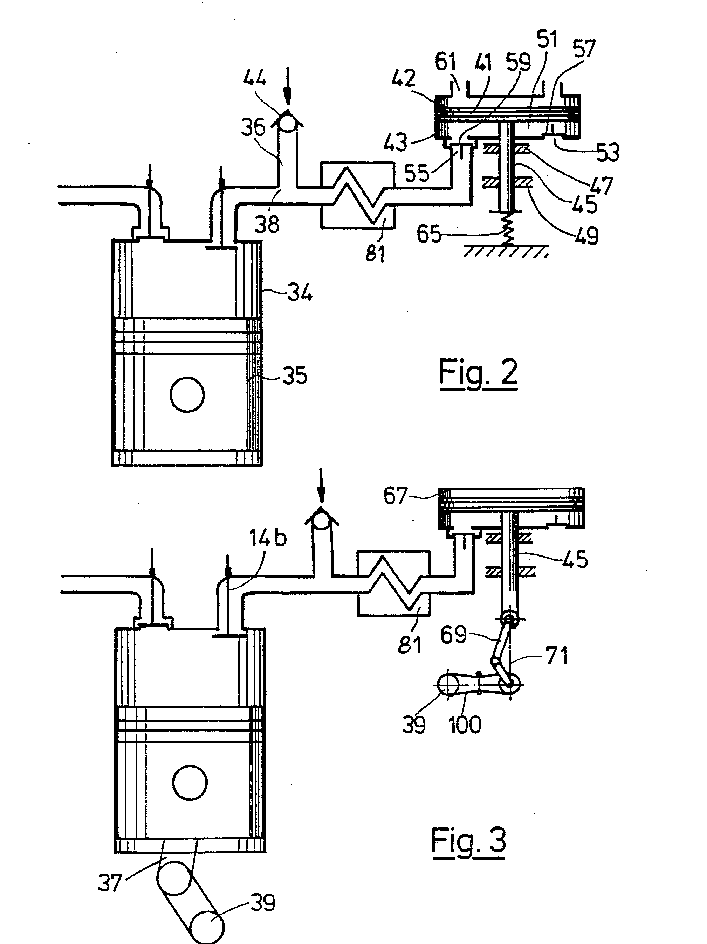

Bei der in Fig. 2 gezeigten Variante ist nur ein Motorzylinder 34 gezeigt, der dem in Fig. 1 gezeigten Zylinder 10b entspricht. Dieser Zylinder 34 enthält einen Kolben 35, der über ein Pleuel 37 mit der Motorkurbelwelle 39 verbunden ist. Bei dieser Variante ist der Abgaslader 42 über eine Verzweigung 38 an die mit einer Rückschlagklappe 44 stromauf von dieser Verzweigung 38 versehene Ansaugleitung 36 angeschlossen, so daß eine direkte Ansaugung unter Umgehung des Laders 42 möglich ist. Der Wärmetauscher 81 befindet sich zweckmäßigerweise zwischen dem Lader 42 und der Verzweigung 38, so daß nun die durch die Verdichtung im Lader erhitzte Luft den Wärmetauscher durchfließt.

0126463

Der Verdrängerlader 42 ist als kurzhubiger Flachkolben-Lader ausgebildet, dessen als Trennwand dienender Kolben 41 mit einer aus dem Gehäuse 43 des Laders 42 herausgeführten Kolbenstange 45 versehen ist, die außerhalb des Gehäuses 43 in Richtung der Kolbenbewegung durch Führungen 47 und 49 geführt ist. Das Führungsspiel und die Führungslänge sind dabei so bemessen, daß sich der Kolben abgesehen von einem gegebenenfalls vorhandenen Dichtungselement berührungsfrei im Gehäuse 43 bewegen kann. Dadurch ergibt sich eine sehr kompakte, kostengünstige Bauweise hoher Leistung. Die Ladeluftkammer 51 des Laders 42 ist am Lufteinlaß 53 und am Luftauslaß 55 mit jeweils einer Rückschlagklappe 57 bis 59 versehen, wobei jedoch die Rückschlagklappe 59 am Luftauslaß 55 auch entfallen kann. Die Variante nach Fig. 2 kann ebenfalls zur "Parallelladung" oder zur "direkten Nachladung" eingesetzt werden. Bei der Parallelladung wird durch den Druck der über einen Abgaseinlaß 61 in eine Abgaskammer 63 des Laders 42 einströmenden Abgase der Kolben bzw. die Trennwand 41 in Fig. 2 nach unten gedrückt, während der Motorkolben 35 seinen Saughub ausführt. Bei der direkten Nachladung tritt der Abgasimpuls erst auf, wenn sich der Motorkolben 35 im Bereich des gewünschten Entspannungspunktes befindet. Nach dem Ladehub des Laders 42 wird die Trennwand 41 durch eine auf die Kolbenstange 45 einwirkende Druckfeder 65 wieder in die in Fig. 2 obere Endstellung zurückbewegt.

0126463

Bei manchen Motoren besteht aus räumlichen Gründen und/oder wegen der zeitlichen Aufeinanderfolge der Ventilbewegung keine Möglichkeit, die vorstehend erläuterte Betriebsweise direkt anzuwenden, d. h. die aus dem Auslaßventil des einen Zylinders austretende Abgasdruckwelle unmittelbar zum Einschieben der Ladeluft in einen anderen Zylinder einzusetzen. Dann ist es vorteilhaft, zwischen dem Abgasauslaß des Motorzylinders und der Laderkammer einen Abgaspuffer anzuordnen, wobei dann allerdings die taktweise Beaufschlagung der Laderkammer mit Abgas gesteuert werden muß, d. h. der Laderkammer werden jeweils entsprechend der gewünschten Hubzahl und dem Energiebedarf des Verdichters Abgasmengen aus dem Abgaspuffer zugeführt. Auch hier ist eine - direkte - zeitliche Zuordnung des Verdichterhubs einer Ladeluftkammer zum Ansaughub des entsprechenden Motorzylinders möglich.

Falls die Synchronisation der Bewegungen von Motor- und Laderkolben vorhanden sein soll, kann beim Abgaslader eine Steuerung der Abgasimpulse vorgesehen sein.

Je nach Anforderung kann zur Abgassteuerung die Abgasseite der Laderkammer 18 mit einem Einlaß- und/oder einem Auslaßventil versehen sein. Die Steuerung auf der Abgasseite der Laderkammer 18 kann auch

0126463

elektronisch erfolgen, wobei dem Fachmann die dafür anzuwendenden Mittel zur elektronischen Berücksichtigung von Motor-, Lader- und anderen Betriebsdaten zur Optimierung des Laderbetriebs bekannt sind, einschließlich Klopfregelung bei Ottomotoren bzw. Kontrolle der NOX-Werte und deshalb hier nicht weiter erläutert werden. Diese Optimierung kann außerdem so ausgelegt werden, daß der durch die Ladevorrichtung bewirkte Rückstau der Abgase optimiert wird. Die elektronische Regelung kann sowohl den Wirkungsgrad und das Verhalten des Antriebssystems als auch die Kosten vorteilhaft verändern.

Abhängig von der Motorbauart und insbesondere auch von der Höchstdrehzahl des Motors kann es vorteilhaft sein, einen Lader mit mehreren Zylinderpaaren eines Viertaktmotors zu verbinden, bzw. mit mehreren Zylindern eines Zweitaktmotors. Insbesondere bei Vielzylindermotoren wird man die Abgase mehrerer Motorzylinder in einen gemeinsamen Abgassammler einleiten, der dann gleichzeitig als Druckausgleichsbehälter und Puffer dient. Dabei kann es bei großen Motoren kostengünstig sein, mehrere Laderkammern 18 aus einem Abgassammler zu versorgen. Besonders vorteilhaft ist aber, daß es auf diese Weise möglich ist, die oben beschriebene vorteilhafte Betriebsweise der direkten bzw. individuellen Parallel- oder Nachladung der einzelnen Motorzylinder bei Motoren beliebiger Konstruktion und Zylinderzahl einzusetzen.

- 18 -

0126463

Für die beschriebenen Verfahren der "Parallelladung" und der "direkten Nachladung" ist die Synchronisation zwischen der Bewegung der Motorkolben und der Bewegung des Laders wichtig. Dadurch wird aber auch eine Möglichkeit eröffnet, die Mengenregelung über eine Veränderung der Phasenlage zwischen Motorbewegung und Laderbewegung durchzuführen. Dies ist insbesondere interessant für die Mengenregelung eines mechanisch betriebenen Laders, wie er beispielsweise in Fig. 3 dargestellt ist, weil dadurch die sonst erforderliche, für mechanische Lader sehr aufwendige Mengenregelung durch Hubveränderung, Drehzahlregelung oder gar Abblasen verdichteter Luft entfallen kann.

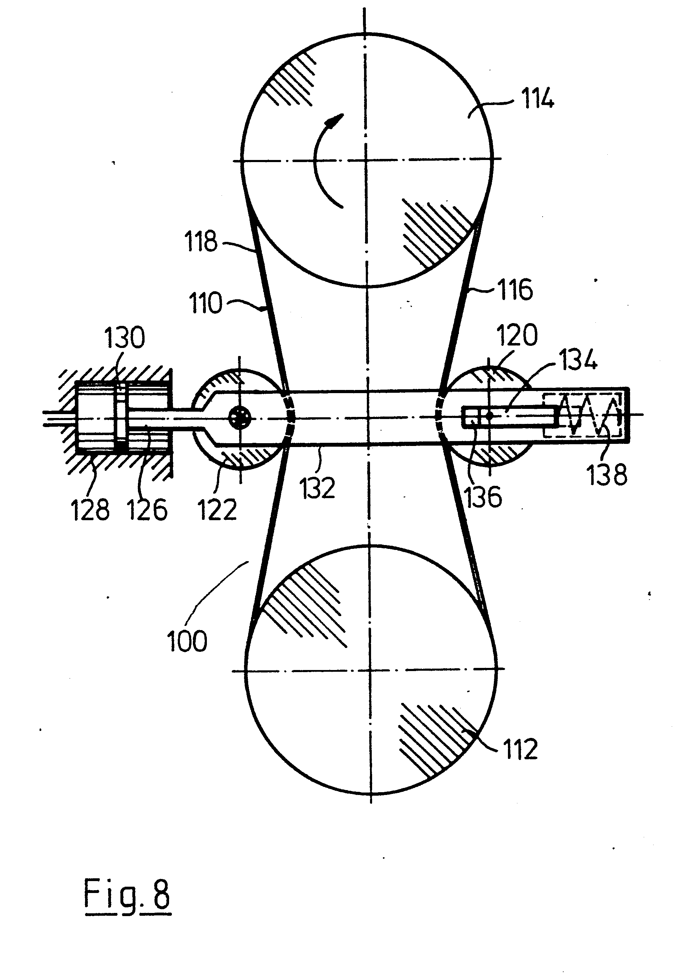

Der Lader 67 in Fig. 3 unterscheidet sich von dem durch Abgas betriebenen Lader 42 nach Fig. 2 dadurch, daß die Abgaskammer 63 fehlt und die Kolbenstange 45 über ein Pleuel 69 mit einer Kurbel 71 verbunden ist, die ihrerseits über einen insgesamt mit 100 bezeichneten Bandtrieb von der Motorkurbelwelle 39 aus antreibbar ist, wobei der Bandtrieb 100 eine Vorrichtung umfaßt, die es ermöglicht, die Phasenlage zwischen der Motorkurbelwelle 39 und der zum Antrieb des Laders 67 dienenden Kurbel 71 zu verändern. Diese Vorrichtung wird anschließend noch näher anhand der Fig. 8 und 9 erläutert.

0126463

Im Motorzylinder 34 (Fig. 2) wird die volle Füllmenge bei der "direkten Nachladung" dann erreicht, wenn der obere Totpunkt des Laders 67 genau auf den gewünschten Entspannungspunkt des Motorzylinders 34 abgestimmt ist.

Versieht man den in Fig. 3 gezeigten Lader 67 an seiner oberen Begrenzung mit einer Stirnwand, die einen Lufteinlaß und einen Luftauslaß besitzt, wobei der Lufteinlaß und gegebenenfalls der Luftauslaß mit je einem Rückschlagventil versehen sind, dann erhält man auf einfache Weise eine zweite Ladeluftkammer. Vorteilhafterweise verbindet man jede dieser Ladeluftkammern mit jeweils einer Hälfte der Lufteinlässe des Motors. Dadurch kann die mit größerer Motorzylinderzahl und höherer Motordrehzahl zunehmende gegenseitige Behinderung der Ladeluftimpulse vorteilhaft reduziert werden.

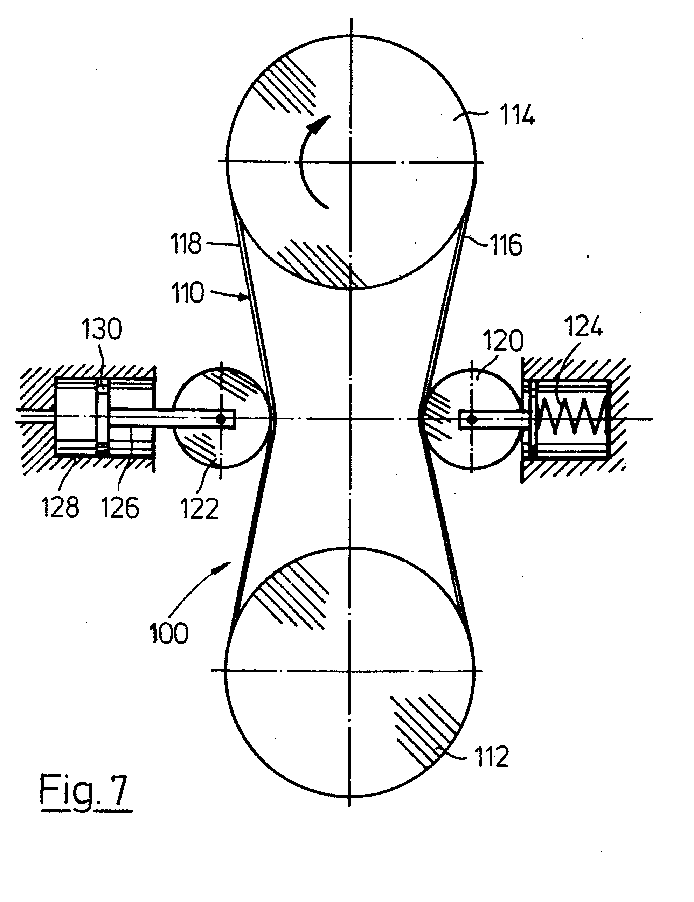

Der in Fig. 7 dargestellte Bandtrieb 100 umfaßt ein Band 110, vorzugsweise einen Zahnriemen, der über insgesamt vier Rollen geführt ist, nämlich eine Antriebsrolle 114, eine Abtriebsrolle 112 und zwischen Abtriebsrolle 112 und Antriebsrolle 114 in Bandlaufrichtung gesehen über eine quer zur Bandlaufrichtung bewegliche Rolle 120, sowie zwischen Antriebsrolle 112 und Abtriebsrolle 112 über eine quer zur Bandlaufrichtung einstellbare Rolle 122. Die Rolle 120 liegt damit am rücklaufenden Trum 116 und die Rolle 122 am antreibenden Trum 118 des Bandes 110 an. Diese Anordnun ist deshalb zweckmäßig, weil die Rolle 120 durch eine Feder 124 gegen das Band 110 gedrückt wird, um die gewünschte Bandspannung aufrechtzuerhalten. Durch die Möglichkeit, daß sich die Rolle 120 etwas quer zur Bandlaufrichtung bewegt, ohne daß dies durch eine Verstellung der Rolle 122 veranlaßt ist, würde die Anordnung der Rolle 120 im Bereich des antreibenden Trums geringfügige Längenänderungen des antreibenden Trums in unkontrollierter Weise ermöglichen und damit eine Störung des absoluten Gleichlaufs von antreibender Rolle 114 und Abtriebsrolle 112.

Die Rolle 122 ist dagegen in ihrer Lage quer zur Laufrichtung des Bandes 110 genau einstellbar. Beim gezeigten Beispiel ist hierzu die Rolle 122 an einer Kolbenstange 126 gelagert, die mit einem in einem Zylinder 128 verschieblich angeordneten Kolben 130 verbunden ist, der beidseitig hydraulisch beaufschlagbar ist, d. h. es handelt sich beim Zylinder 128 mit dem Kolben 130 um einen doppeltwirkenden Hydraulikzylinder, durch den die Position der Rolle 122 genau einstellbar ist. Die hydraulische Betätigung ermöglicht eine einfache Regelung der Phasenlage des Bandtriebs in Abhängigkeit von extern ermittelten Parametern, wie z. B. den Betriebsdaten eines Kraftfahrzeugs und seines Verbrennungsmotors.

0126463

Wird die Rolle 122 in Fig. 7 nach rechts bewegt, verlängert sich das antreibende Trum 118, während sich das rücklaufende Trum 116 entsprechend verkürzt. Die Abtriebsrolle eilt dadurch der Antriebsrolle vor.

Bewegt man die Rolle 122 in der Gegenrichtung, gelangt das antreibende Trum 118 allmählich in seine kürzeste, gestreckte Lage. Die Anordnung ist bei beiden Ausführunsbeispielen jeweils so getroffen, daß in der einen Endstellung der einstellbaren Rolle 122 das eine Trum 116 oder 118 gestreckt verläuft und das jeweils andere Trum 118 oder 116 dann seine größte Auslenkung aus der gestreckten Lage aufweist. Unter dieser Voraussetzung sind Variationen in der Anordnung der Rollen 120 und 122 möglich. So könnte in Fig. 7 die Rolle 120 z. B. auf der anderen Bandseite angeordnet sein, müßte dann aber das Trum 116 statt nach links nach rechts aus der gestreckten Stellung drücken. Bei der Anordnung nach Fig. 7 muß die Feder 124 die Stellbewegung der Rolle 122 ausgleichen. Bei der Ausführungsform nach Fig. 8 ist dies nicht nötig, es kann dort also eine kleinere, härtere Feder verwendet werden.

Bei der Ausführungsform nach Fig. 8 ist mit der Kolbenstange 126 ein Lagerelement 132 verbunden, in dem die Rolle 122 fest gelagert ist. Die Rolle 120 ist in einem Schieber 134 gelagert, der im Lagerelement 132 quer zur Laufrichtung des Bandes 110 begrenzt beweglich ist, wozu Führungsschlitze 136 zur Aufnahme des Schiebers 134 dienen können. Der Schieber 134 ist am Lagerelement 132 über eine Feder 138 abgestützt. Diese Feder übernimmt im wesentlichen die Aufgabe, das Band 110 unter der gewünschten Spannung zu halten.

Vorzugsweise ist der Lader 26 oder 64 mit einer Dämpfung für die Bewegung der Trennwand 20 bzw. 41 versehen, die beispielsweise hydraulisch ausgebildet sein kann.

0126463

Patentansprüche:

1. Verfahren zum Einbringen der Ladeluft in den Zylinder eines Verbrennungsmotors, bei dem vorverdichtete Luft aus einem Verdrängerlader durch Wärmetausch gekühlt und anschließend entspannt wird, bis der gewünschte Ladedruck erreicht ist, dadurch gekennzeichnet, daß die Ausschubbewegung des Kolbens bzw. der Kolben des Verdrängerladers mit der Kolbenbewegung der zu versorgenden Motorzylinder derart synchronisiert ist, daß die aus dem Lader verdrängte Luft unmittelbar in den betroffenen Motorzylinder überströmt.

2. Verfahren nach Anspruch 1, dadurch gekennzeichnet, daß die Entspannung im Motorzylinder stattfindet.

3. Verfahren nach Anspruch 2, dadurch gekennzeichnet, daß die Synchronisation zwischen der Motor- und der Laderbewegung unveränderbar vorgegeben ist.

4. Verfahren nach Anspruch 3, dadurch gekennzeichnet, daß bei einem abgasgetriebenen Verdrängerlader der Rhythmus der Ladeluftwellen durch den Rhythmus der natürlichen Abgasimpulse bestimmt wird.

5. Verfahren nach Anspruch 4, dadurch gekennzeichnet, daß der Beginn der Entspannung durch das vorzeitige Schließen des Einlaßventils am Motorzylinder bewirkt wird.

0126463

6.  Verfahren nach Anspruch 5, dadurch gekennzeichnet, daß der Schließzeitpunkt fest eingestellt ist.

7.  Verfahren nach Anspruch 5, dadurch gekennzeichnet, daß der Schließzeitpunkt geregelt wird.

8.  Verfahren nach Anspruch 2, dadurch gekennzeichnet, daß die Festlegung des Entspannungsbeginns und/oder die Menge der Ladeluft im Motorzylinder durch die Veränderung der Phasenlage zwischen der Bewegung des Motorkolbens und des Laderkolbens bewirkt wird.

9.  Verfahren nach Anspruch 8, dadurch gekennzeichnet, daß die Ladeluftmenge zusätzlich beeinflußt wird.

10.  Verfahren nach Anspruch 8 oder 9, dadurch gekennzeichnet, daß der Entspannungsbeginn der Ladeluft im Motorzylinder durch das Hubende des Laderkolbens bestimmt wird.

11.  Verfahren nach Anspruch 10, dadurch gekennzeichnet, daß ein Teil der Luft im Motorzylinder nach dem Hubende des Laderkolbens in den Lader zurückströmt.

12.  Verfahren nach einem der Ansprüche 6 oder 7 bzw. 10 oder 11, dadurch gekennzeichnet, daß ein Teil der Ladeluft durch die Bewegung des Motorkolbens angesaugt wird.

0126463

13. Verfahren nach Anspruch 12, dadurch gekennzeichnet, daß der durch die Bewegung des Motorkolbens angesaugte Teil der Ladeluft direkt durch den Lader fließt.

14. Verfahren nach Anspruch 12, dadurch gekennzeichnet, daß der durch die Bewegung des Motorkolbens angesaugte Teil der Ladeluft über einen Bypass parallel zum Lader geführt wird.

15. Verfahren nach einem der Ansprüche 10, 11, 13 oder 14, dadurch gekennzeichnet, daß bei abgasgetriebenen Verdrängerladern die Veränderung der Phasenlage der Bewegung von Motorkolben und Laderkolben durch eine regelbare Steuerung auf der Abgasseite des Laders bewirkt wird.

16. Verfahren nach einem der Ansprüche 10, 11, 13 oder 14, dadurch gekennzeichnet, daß bei mechanisch angetriebenen Verlängerladern die Veränderung der Phasenlage zwischen der Bewegung des Motorkolbens und des Laderkolbens durch einen Riementrieb bewirkt wird, bei dem die Winkelstellung zwischen Antriebs- und Abtriebswelle veränderbar ist.

17. Verfahren nach Anspruch 4, dadurch gekennzeichnet, daß die Intesität der natürlichen Abgasimpulse durch zusätzliche Vorrichtungen auf der Abgasseite des Laders, wie z. B. Drosselstellen, verstärkt wird.

- 4 -

0126463

18. Verfahren nach Anspruch 10 oder 11, dadurch gekennzeichnet, daß zur unabhängigen Beeinflussung von Luftmenge und Entspannungsbeginn der Hubraum des Laders unter Berücksichtigung der Schadräume von Lader, Luftleitung, Wärmetauscher und Motorzylinder entsprechend verändert wird.

19. Verfahren nach Anspruch 4, dadurch gekennzeichnet, daß dem Verdichtungshub des Laders eine einstellbare Kraft entgegenwirkt.

20. Verfahren nach Anspruch 1, dadurch gekennzeichnet, daß die Entspannung zwischen Wärmetauscher und Motoreinlaß durchgeführt wird.

21. Verfahren nach Anspruch 20, dadurch gekennzeichnet, daß die Entspannungsenergie der Ladeluft dem Motorabtrieb zugeführt wird.

22. Verfahren nach Anspruch 20, dadurch gekennzeichnet, daß die Entspannungsenergie der Ladeluft dem Lader zugeführt wird.

23. Verfahren nach Anspruch 3, dadurch gekennzeichnet, daß bei einem mechanisch angetriebenen Verdrängerlader der Rhythmus der Ladeluftwellen durch die Kurbelwelle des Motors vorgegeben wird.

24. Verfahren nach Anspruch 4, 17 und/oder 19, dadurch gekennzeichnet, daß der Entspannungsbeginn der Ladeluft im Motorzylinder durch das Hubende des Laderkolbens bestimmt wird.

25. Verfahren nach Anspruch 24, dadurch gekennzeichnet, daß ein Teil der Luft im Motorzylinder nach dem Hubende des Laderkolbens in den Lader zurückströmt.

26. Verbrennungsmotor zur Durchführung des Verfahrens nach Anspruch 2, mit einem Verdrängerlader, der über einen Wärmetauscher für die Ladeluft unmittelbar mit dem Lufteinlaß des Motors verbunden ist, dadurch gekennzeichnet, daß eine Vorrichtung zur Synchronisierung der Ausschubbewegung des bzw. der Kolben des Verdrängerladers mit der Kolbenbewegung des zu versorgenden Motorzylinders vorhanden ist und daß eine Vorrichtung die Beendigung der Füllphase des betroffenen Motorzylinders bewirkt, bevor der Motorkolben den unteren Totpunkt erreicht.

M 16·05·81
0126463

Fig. 1

0126463

Fig. 2

Fig. 3

0126463

# Fig. 4

# Fig. 5

# Fig. 6

0126463

## Fig. 7

0126463

Fig. 8

0126463

Europäisches
Patentamt

**EUROPÄISCHER RECHERCHENBERICHT**

Nummer der Anmeldung

EP 84 10 5707

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | BE-A- 413 171 (VAN GEERT)<br><br>* Seite 2, Zeile 28 - Seite 6, Zeile 11; Figures * | 1-3,9, 23 | F 02 B 37/00<br>F 02 B 33/06<br>F 02 B 39/04 |
| A | | 12,14, 26 | |
| X | US-A-2 391 163 (JESSUP)<br><br>* Seite 1, Absatz 4 - Seite 3, Absatz 3; Figuren 1-5 * | 1,2,8-10,18, 23 | |
| A | | 12,14 | |
| X | GB-A- 815 494 (CROSSLEY)<br><br>* Seite 1, Zeile 18 - Seite 2, Zeile 62; Figuren 1-9 * | 1-4,17 ,24 | RECHERCHIERTE SACHGEBIETE (Int. Cl. 3) |
| A | | 26 | F 02 B |
| X | US-A-4 211 082 (BRISTOL)<br><br>* Spalte 4, Zeile 15 - Spalte 7, Zeile 53; Figuren * | 1,2,4, 19,26 | |

-/-

Der vorliegende Recherchenbericht wurde für alle Patentansprüche erstellt.

| Recherchenort<br>DEN HAAG | Abschlußdatum der Recherche<br>08-08-1984 | Prüfer<br>HAKHVERDI M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 225 527 (HULT) <br> * Seite 1, Zeile 34 - Seite 2, Zeile 111; Figur 1 * | 1-3 | |
| A | | 20-22 | |
| | --- | | |
| X | FR-A- 437 926 (SULZER) <br> * Seite 1, Zeile 1 - Seite 2, Zeile 35; Figuren 1-3 * | 1,2 | |
| A | | 9,12, 14,18, 26 | |
| | --- | | |
| A | WO-A-8 102 445 (BATTELLE) <br> * Seite 6, Zeile 8 - Seite 9, Zeile 11; Figuren 1-5 * | 1,3,4 | |
| | ----- | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 08-08-1984 | HAKHVERDI M. |